# FASCICULE DE BREVET EUROPEEN

(11) **EP 1 986 532 B1**
(45) Date de publication et mention de la délivrance du brevet: **11.08.2010**
(21) Numéro de dépôt: 07730978.9
(22) Date de dépôt: 14.02.2007
(51) Int. Cl.: A47J 36/02

(54) **ARTICLE CULINAIRE ANODISE ET PROCEDE DE FABRICATION D'UN TEL ARTICLE**
ELOXIERTER KÜCHENARTIKEL UND VERFAHREN ZU SEINER HERSTELLUNG
ANODISED CULINARY ITEM AND METHOD FOR PRODUCING ONE SUCH ITEM

(30) Priorité: 14.02.2006 FR 0601313
(43) Date de publication de la demande: 05.11.2008
(73) Titulaire: SEB SA, 69130 Ecully (FR)
(72) Inventeur: CUILLERY, Pascal, F-74210 Faverges (FR); BRASSET, Jean-François, F-74000 Annecy (FR)
(74) Mandataire: Somnier, Jean-Louis
(86) Numéro de dépôt international: PCT/FR2007/000267
(87) Numéro de publication internationale: WO 2007/093707

(56) Documents cités:
- EP-A1- 0 970 647
- WO-A-2005/018393
- DE-A1- 4 434 425
- FR-A1- 2 711 051
- GB-A- 2 370 975
- US-A1- 2005 205 582

## Description

La présente invention concerne un article culinaire réalisé à partir d'une feuille en aluminium anodisé ou en alliage d'aluminium anodisé, ladite feuille étant déformée pour constituer un réceptacle creux apte à recevoir des aliments. La présente invention concerne également un procédé de fabrication d'un tel article.

Parmi les articles culinaires actuellement disponibles dans le commerce, les articles en aluminium anodisé, ou en alliage d'aluminium anodisé, constituent une gamme de produits particulièrement prisée pour leur esthétique.

Dans la suite de la présente description, on utilisera l'expression "aluminium anodisé" à la fois pour l'aluminium anodisé en tant que tel et pour un alliage d'aluminium anodisé, c'est-à-dire un alliage d'aluminium qui aura été soumis à un traitement destiné à former une couche d'anodisation.

Classiquement, ces articles culinaires présentent une face intérieure qui est destinée à recevoir les aliments, notamment pour leur cuisson. Cette face intérieure comprend, de manière très courante, un revêtement antiadhésif, par exemple une couche d'émail ou, de préférence, un revêtement à base d'une ou de plusieurs résines fluorocarbonées.

La face extérieure de ces articles culinaires est quant à elle en aluminium anodisé, ou en alliage d'aluminium anodisé. La couche d'anodisation confère à ces articles un aspect analogue à celui de l'ardoise, visuellement doux au toucher. Cette face extérieure a ainsi une apparence moins froide qu'une surface lisse en aluminium ou alliage en d'aluminium.

Outre cet aspect esthétique, la réalisation d'une telle couche d'anodisation permet à ces articles culinaires d'être particulièrement résistants aux chocs et faciles à nettoyer.

Cependant, on observe qu'au bout d'un certain nombre de cycles répétés de chauffage et de refroidissement, le fond de tels articles culinaires devient bombé. En raison de cette déformation irréversible, de tels articles culinaires deviennent inutilisables, pour le moins sur des sources de chaleurs telles que plaques électriques ou plaques vitrocéramiques.

Ce phénomène est observable, même dans l'hypothèse où le fond des articles culinaires est embouti de manière à leur conférer une légère concavité.

La Demanderesse a déjà proposé de résoudre ce problème de déformation du fond des articles culinaires réalisés à partir d'une feuille en métal ou en alliage léger emboutie, notamment dans les documents FR 2711050 et FR 2711051, et EP 0970647 par l'encastrement d'une plaque dans une portion de la feuille correspondant au fond de l'article culinaire, ladite plaque présentant des propriétés mécaniques, thermiques et physiques différentes de celle de ladite feuille.

En particulier, la plaque utilisée dans les documents FR 2 711 050, FR 2 711 051 et EP0970647 est en acier ou, de préférence, en acier inoxydable. Une plaque en cuivre peut également être utilisée.

Toutefois, si l'encastrement d'une telle plaque se révèle satisfaisante pour des articles culinaires réalisés à partir d'une feuille en métal ou en alliage léger, par exemple en aluminium ou en alliage d'aluminium, un tel encastrement s'avère impossible dans le cas où la feuille est en aluminium anodisé ou en alliage d'aluminium anodisé.

Il est en effet impossible de procéder au matriçage d'une plaque dans une feuille en aluminium anodisé ou en alliage d'aluminium anodisé en raison de la dureté de la couche d'anodisation.

Il est également impossible de procéder à une étape d'anodisation de l'article culinaire obtenu après matriçage d'une plaque dans une feuille en aluminium ou en alliage d'aluminium, les matériaux utilisés pour ce type de plaques, tels qu'acier, acier inoxydable ou encore cuivre, ne résistant pas au traitement ultérieur d'anodisation.

On connaît par ailleurs à partir du document US 2005/205582 un article culinaire réalisé à partir d'une feuille emboutie présentant la forme finale de l'article et définissant une face intérieure destinée à la cuisson des aliments et une face extérieure destinée à être disposée du côté de la source de chaleur, ledit article culinaire comprenant un fond et une paroi latérale s'élevant à partir dudit fond, la face extérieure du fond comprenant une plaque centrée sur le fond et recouvrant au moins une portion de la feuille. Toutefois, dans US 2005/205582, la plaque est utilisée pour améliorer la conductivité thermique de l'article culinaire. La plaque est donc réalisée en aluminium qui possède une bonne conductivité thermique. Or, une plaque en un métal tel que l'aluminium ne permet pas de maîtriser la déformation du fond de cet article se produisant au cours de cycles répétés de chauffage et de refroidissement.

Dans ce contexte, un but de la présente invention est de proposer un article culinaire du type précité dans US 2005/205582, pour lequel on n'observe pas de déformation irréversible du fond au cours de cycles répétés de chauffage et de refroidissement.

Pour cela, il est proposé un article culinaire qui est réalisé à partir d'une feuille en aluminium ou en alliage d'aluminium, avec la face extérieure au moins de la paroi latérale en aluminium anodisé ou en alliage d'aluminium anodisé et la face intérieure de l'article culinaire pourvue d'un premier revêtement antiadhésif, et dont la plaque recouvrant une portion de la face extérieure du fond est réalisée en un métal ou en un matériau revêtu d'un métal, d'un carbure ou d'un nitrure d'un métal, ledit métal étant choisi de manière à résister à une étape d'anodisation.

Par aluminium ou alliage d'aluminium, on entend au sens de la présente invention un matériau métallique comprenant de l'aluminium, qui remplit les critères d'aptitude au contact alimentaire conformément à l'arrêté du 27 août 1987.

Grâce à la présence de la plaque encastrée, l'article culinaire ne se déforme pas sous l'effet d'un très grand nombre de cycles répétés de chauffage et de refroidissement.

On obtient donc un article culinaire qui ne se déforme pas au cours du temps tout en conservant ses propriétés esthétiques conférées par les zones de la face extérieure qui sont en aluminium anodisé ou en alliage d'aluminium anodisé.

L'invention concerne également un procédé de fabrication d'un article culinaire comprenant un fond et une paroi latérale dont la face extérieure est en aluminium anodisé et la face intérieure est pourvue d'un revêtement antiadhésif.

On connaît déjà à partir du document GB 2370975 un procédé comprenant les étapes suivantes :
- mise en forme, par emboutissage, d'une feuille en aluminium ou en alliage d'aluminium pour lui conférer la forme finale de l'article culinaire et ainsi définir la face intérieure de l'article culinaire, destinée à la cuisson des aliments, et la face extérieure de l'article culinaire, destinée à être disposée du côté de la source de chaleur,
- dépôt, au moins sur toute la face intérieure de l'article culinaire, d'au moins une couche destinée à former, après cuisson, un premier revêtement antiadhésif, puis
- anodisation de l'article culinaire, la plaque étant réalisée en un métal ou en un matériau revêtu d'un métal, d'un carbure ou d'un nitrure de ce même métal, ledit métal étant choisi de manière à résister à cette étape d'anodisation.

Un tel procédé permet de réaliser des articles culinaires présentant une face extérieure en aluminium anodisé ou en alliage d'aluminium anodisé, dont l'aspect est visuellement doux au toucher. Toutefois, de tels articles présentent l'inconvénient que leur fond devient bombé au bout d'un certain nombre de cycles répétés de chauffage et de refroidissement, et qu'une telle déformation est irréversible. De tels articles sont alors inutilisables sur des sources de chaleur telles que les plaques électriques ou vitrocéramiques.

Dans ce contexte, un but de la présente invention est donc de proposer un procédé de fabrication du type précité dans GB 2370975, qui permet d'éviter la déformation irréversible du fond de l'article au cours de cycles répétés de chauffage et de refroidissement.

Pour cela, il est proposé un procédé comprenant une étape supplémentaire d'application par matriçage sur la face extérieure du fond, d'une plaque destinée à en recouvrir au moins une portion, cette étape de matriçage étant réalisée avant le dépôt du premier revêtement antiadhésif et l'anodisation de l'article culinaire.

La plaque, aisément matricée dans la feuille en aluminium ou en alliage d'aluminium, ainsi que le premier revêtement antiadhésif déposé sur toute la face intérieure de l'article culinaire, jouent le rôle de masques protégeant les zones de la feuille de l'anodisation.

Il a en effet été constaté que le premier revêtement antiadhésif résistait à la dernière étape d'anodisation, et conservait des propriétés d'anti-adhésivité tout à fait comparables à celles d'un revêtement antiadhésif qui n'aurait pas été soumis à une telle étape d'anodisation.

Ainsi, au cours de cette dernière étape d'anodisation, seules les portions de la feuille en aluminium ou en alliage d'aluminium, qui ne sont recouvertes ni par la plaque, ni par le premier revêtement antiadhésif, seront soumises au traitement d'anodisation. En effet, l'anodisation, qui se réalise classiquement dans un bain d'acide sulfurique, n'altère ni le métal de la plaque ou le métal revêtant ladite plaque, ni le premier revêtement antiadhésif.

De manière avantageuse, le procédé comprend une étape complémentaire réalisée après l'étape de matriçage et avant l'étape de dépôt du premier revêtement antiadhésif. Selon cette variante, on procède en outre au dépôt, sur tout ou partie de la portion de la feuille non recouverte par la plaque, d'au moins une couche destinée à former, après cuisson, un second revêtement antiadhésif.

De la même manière que précédemment, le second revêtement antiadhésif, qui résiste à l'étape d'anodisation, se comporte comme un masque lors de la dernière étape d'anodisation.

Indirectement, une telle variante du procédé présente un intérêt économique non négligeable, les coûts liés à l'étape d'anodisation étant proportionnels à la surface de la feuille à anodiser.

Aussi, grâce à l'application d'un second revêtement antiadhésif sur la face extérieure du fond de l'article culinaire, on diminue la surface en aluminium ou en alliage d'aluminium qui n'est par ailleurs pas masquée par la plaque.

On peut ainsi même envisager une face extérieure de fond entièrement revêtue par la seule plaque, ou alors par la plaque et par le second revêtement antiadhésif et ainsi procéder à l'anodisation de la seule face extérieure de la paroi latérale de l'article culinaire.

Rien n'interdit d'envisager le recouvrement, total ou partiel, de la plaque par ledit second revêtement antiadhésif.

D'autres avantages et particularités de la présente invention résulteront de la description qui va suivre, donnée à titre d'exemple non limitatif et faite en référence aux figures annexées :
- la figure 1 représente une vue schématique en coupe d'un article culinaire conforme à l'invention selon une première variante de réalisation,
- la figure 2 représente une vue schématique de dessous et en plan de l'article culinaire représenté à la figure 1, et
- la figure 3 représente une vue schématique de dessous et en plan du fond d'un article culinaire selon une deuxième variante de réalisation.

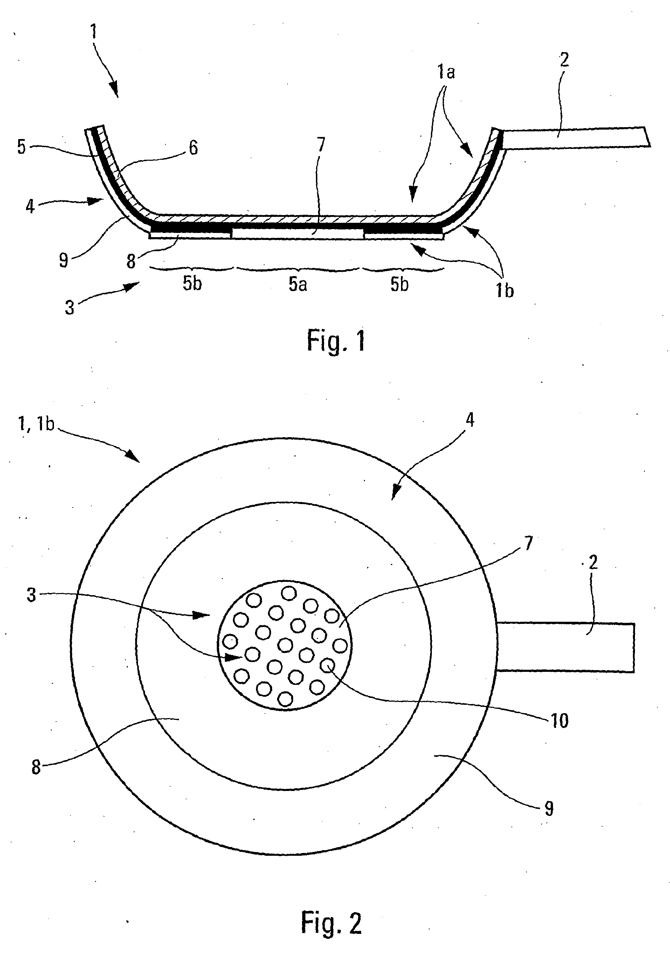

Les éléments identiques représentés sur les figures 1 et 2 sont identifiés par des références numériques identiques.

Sur les figures 1 et 2, on a représenté, à titre d'exemple d'article culinaire, une poêle 1.

La poêle 1 comprend une poignée de préhension 2, un fond 3 et une paroi latérale 4 s'élevant à partir du dit fond 3.

Le fond 3 et la paroi latérale 4 sont réalisés à partir d'une feuille 5 présentant la forme d'un disque.

Cette feuille 5, qui est en aluminium ou en alliage d'aluminium, est emboutie de manière à présenter la forme finale de la poêle 1.

A titre d'alliages d'aluminium utilisables selon la présente invention, on peut notamment citer les alliages connus pour leur aptitude à l'émaillage, par exemple les alliages 3003, 4006 et 4700. L'alliage d'aluminium préféré est l'alliage 3003.

La poêle 1 comprend une face intérieure la destinée à la cuisson des aliments et une face extérieure 1b destinée à être disposée du côté de la source de chaleur, telle qu'une plaque de cuisson ou un brûleur.

La face intérieures 1a de la poêle 1 comprend un premier revêtement antiadhésif 6.

La face extérieure 1b du fond 3 comprend une plaque 7 centrée sur le fond 3 et recouvrant au moins une portion 5a de la feuille 5.

La plaque 7 est réalisée en un métal ou en un matériau revêtu d'un métal.

Dans les deux cas, le métal de la plaque 7 ou le métal revêtant le matériau est choisi de telle sorte qu'il résiste à une étape d'anodisation, c'est-à-dire qu'il ne soit pas dégradé par le traitement dans le bain d'anodisation à base d'acide sulfurique.

Ainsi, le métal de la plaque est plus particulièrement choisi parmi les métaux de transition tels que le titane, le zirconium ou le niobium, et est, de préférence, le titane.

La plaque 7 peut également être formée d'un matériau, ce matériau étant recouvert de métal. Dans ce cas, le matériau, qui constitue le coeur de la plaque 7, est choisi parmi l'acier, l'acier inoxydable, ferritique ou non, tandis que le métal qui recouvre ledit matériau est choisi parmi les métaux de transition tels que le titane, le zirconium, le niobium, ou alors par un carbure ou un nitrure d'un métal de transition tel que le titane, le zirconium ou le niobium.

Lorsque l'on utilise un matériau présentant des propriétés ferromagnétiques, la poêle 1 selon l'invention présente l'avantage de pouvoir être utilisable avec un moyen de chauffage par induction. Un matériau convenant pour une telle utilisation est notamment l'acier inoxydable AISI 430.

Dans cette dernière hypothèse, la plaque 7 sera ajourée et s'étendra de préférence sur toute la surface de la face extérieure 1b du fond 3.

La plaque 7 peut éventuellement être composée de plusieurs éléments et donc ne pas être unitaire. Elle est de préférence partiellement encastrée dans la feuille 5.

Dans la variante illustrée aux figures 1 et 2, la portion 5b de la feuille 5 non recouverte par la plaque 7 comprend un second revêtement antiadhésif 8 tandis que la face extérieure 1b de la paroi latérale 4 comprend une couche d'anodisation 9.

La présence de ce second revêtement antiadhésif 8 est optionnelle et l'on pourrait tout à fait envisager d'avoir un article culinaire ne comprenant, au niveau de sa face extérieure 1b, que la plaque 7 encastrée, totalement ou partiellement. Ainsi, la paroi latérale 4 et les surfaces de la face extérieure 1b du fond 3 situées en dehors de la plaque 7, et notamment au niveau de la portion 5a de la feuille 5, sont en aluminium anodisé ou en alliage d'aluminium anodisé.

Comme représenté de manière visible sur la figure 2, la plaque 7 comprend de manière particulièrement avantageuse des trous 10.

Ces trous 10 peuvent être dotés du second revêtement antiadhésif 8 ou, au contraire, laissés libres et donc être en aluminium anodisé ou en alliage d'aluminium anodisé.

Dans la variante illustrée aux figures 1 et 2, la face extérieure 1b du fond 3 est entièrement recouverte par la plaque 7 et le second revêtement antiadhésif 8, déposé au niveau de la portion 5b du fond 3 et dans les trous 10.

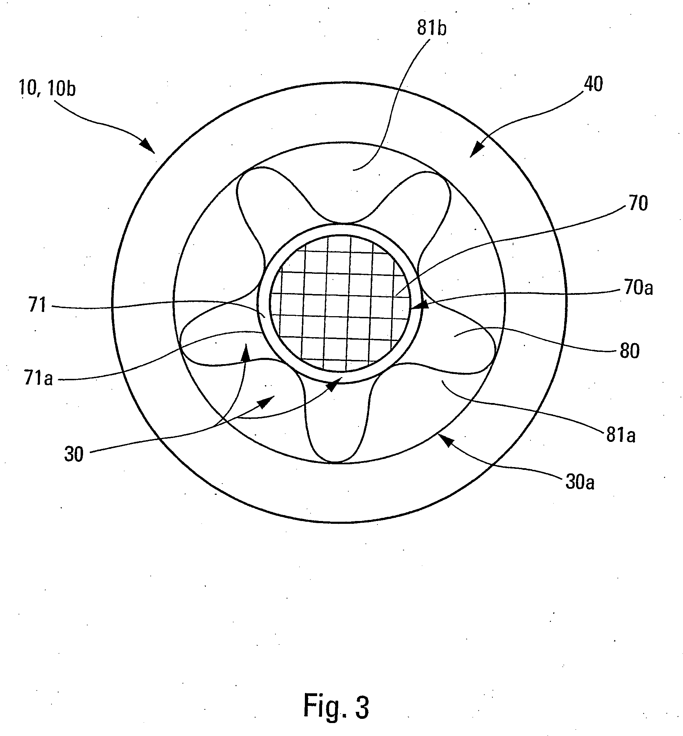

On peut cependant tout à fait envisager que les surfaces de la face extérieure 1b du fond 3 qui ne sont pas recouvertes par la plaque 7 et par le second revêtement antiadhésif 8, sont en aluminium anodisé ou en alliage d'aluminium anodisé, comme représenté sur la figure 3 que l'on détaillera ci-après.

Pour les raisons déjà invoquées dans les documents FR 2711050 et FR 2711051, que cela soit pour un article culinaire 1 compatible ou non avec un mode de cuisson par induction, la plaque 7 recouvre entre 5 et 30% de la surface totale du fond 3. Une telle valeur de 30% n'est toutefois pas limitative lorsque l'on recherche à obtenir un article culinaire présentant également des propriétés ferromagnétiques.

Dans une variante plus particulièrement privilégiée, la feuille 5 est emboutie de manière à conférer une légère concavité au fond 3 de l'article culinaire 1.

Toutefois, dans cette dernière hypothèse, lorsque l'article culinaire 1 est disposé sur une plaque de cuisson, la surface portante du fond 3, en général annulaire et dite "diamètre de portée", est revêtue du second revêtement antiadhésif 8 pour éviter toute usure prématurée du fond 3 qui se produirait dans le cas où ce diamètre de portée serait laissé en aluminium anodisé ou en alliage d'aluminium anodisé.

Un tel article culinaire conforme à l'invention, dont la zone du fond destinée à être en contact avec la plaque de cuisson est intégralement revêtue par le second revêtement antiadhésif 8, présente donc un double avantage, d'une part, de ne pas se déformer et, d'autre part, de résister à l'usure et ainsi, de ne pas provoquer de rayures ou de marques sur une plaque de cuisson vitrocéramique, notamment.

Dans une version avantageuse de l'invention, le second revêtement antiadhésif 8 peut être un revêtement d'émail, un revêtement obtenu à partir d'une composition comprenant une résine thermostable résistant à au moins 200°C, ou encore une combinaison de ces deux types de revêtements.

A titre de revêtement d'émail utilisable selon la présente invention, on peut choisir un revêtement d'émail obtenu à partir d'une composition de fritte d'émail comprenant des composés ferromagnétiques. Ainsi, on obtiendra un article culinaire compatible avec un mode de chauffage par induction. A titre d'exemple non limitatif, une telle composition comprenant une fritte d'émail et des composés ferromagnétiques est décrite dans le document FR 2872692 au nom de la Demanderesse.

A titre de revêtement d'émail utilisable selon l'invention, on peut également choisir un revêtement d'émail ayant une épaisseur sensiblement uniforme dont la valeur moyenne est comprise entre 15 et 40 µm, de préférence entre 20 et 30 µm, avec un écart par rapport à cette valeur moyenne d'épaisseur d'au plus 10%, ce revêtement d'émail comprenant 1,5 à 9 % en poids par rapport au poids total du revêtement d'émail d'au moins un élément fondant choisi dans le groupe constitué par l'oxyde de plomb PbO, l'oxyde de bismuth Bi₂O₃ et le pentoxyde de vanadium V₂O₅.

Un tel revêtement d'émail est capable de résister à un traitement ultérieur d'anodisation. Il présente en outre des qualités esthétiques qui rendent inutile la réalisation d'un revêtement d'émail de finition.

Par ailleurs, si la teneur en élément fondant dans le revêtement d'émail est inférieure à 1,5 % en poids par rapport au poids total de ce revêtement, ce dernier est très poreux et son intégrité n'est pas garantie. Par contre, si la teneur en élément fondant dans le revêtement d'émail est supérieure à 9 % en poids par rapport au poids total de ce revêtement, ce dernier ne résiste pas aux attaques acides.

Si la valeur moyenne de l'épaisseur du revêtement d'émail est inférieure à 15 µm (après cuisson), le revêtement d'émail n'est pas assez étanche et présente une résistance insuffisante aux attaques acides, et donc à une anodisation à l'acide sulfurique.

De préférence, l'élément fondant est le pentoxyde de vanadium V₂O₅, présent à raison de 2 à 7 % en poids par rapport au poids total de la couche d'émail.

Dans une version particulièrement avantageuse de l'invention, le revêtement d'émail comprend 4 à 6 % en poids de pentoxyde de vanadium V₂O₅ par rapport au poids total du revêtement. Cette gamme de teneur en vanadium dans le revêtement d'émail garantit une résistance élevée aux attaques acides, et donc à un traitement d'anodisation à l'acide sulfurique.

Enfin, à titre de revêtement d'émail utilisable selon l'invention, on peut également choisir un revêtement préparé à partir d'une composition comprenant une fritte d'émail, éventuellement additionnée de composés ferromagnétiques, et comprenant également des billes de verre comme décrit dans le document FR 2 625 494 également au nom de la Demanderesse.

Le premier revêtement antiadhésif 6 est quant à lui obtenu à partir d'une composition comprenant une résine thermostable résistant à au moins 200°C.

Une telle résine thermostable résistant à au moins 200°C, qu'elle soit employée pour la composition du premier revêtement antiadhésif 6 ou pour la composition du second revêtement antiadhésif 8, comprend classiquement une résine fluorocarbonée, seule ou mélangée avec une ou plusieurs autres résines thermostables résistant à au moins 200°C.

Cette résine fluorocarbonée, dont les propriétés hydrophobes sont reconnues, peut être du polytétrafluoroéthylène (PTFE), du copolymère de tétrafluoroéthylène et de perfluoropropylvinyléther (PFA) ou du copolymère de tétrafluoroéthylène et d'hexafluoropropylène (FEP) ou un mélange de ces résines fluorocarbonées.

Les autres résines thermostables résistant à au moins 200°C peuvent être un polyamide imide (PAI), une sulfone de polyéthylène (PES), un sulfure de polyphénylène (PPS), une polyéthercétone (PEK), une polyétheréthercétone (PEEK) ou une silicone.

Ces résines thermostables présentent donc l'avantage particulier de résister à une étape d'anodisation.

Dans la réalisation représentée à la figure 3, le fond 30 de l'article culinaire 10 comprend une plaque 70 se présentant sous la forme d'une grille encastrée dans la feuille d'aluminium ou d'alliage d'aluminium et centrée sur le fond 30.

Pour rendre l'article culinaire 10 compatible avec un mode de chauffage par induction, on peut employer une plaque que l'on dote de propriétés ferromagnétiques, soit directement par le métal de la plaque 70, métal qui doit par ailleurs répondre aux exigences de résistance à l'anodisation, soit indirectement par le matériau, dans le cas où la plaque 70 est formée par un matériau revêtue de métal.

A la périphérie 70a de la grille 70, est ménagée une gorge annulaire 71.

Au niveau de la portion comprise entre la périphérie 71a de cette gorge annulaire 71 et la périphérie 30a du fond 30, le fond 30 comprend un second revêtement antiadhésif 80 formant un motif et, en dehors des zones revêtues de ce second revêtement antiadhésif 80, des surfaces 81a, 81b en aluminium anodisé ou en alliage d'aluminium anodisé.

La face extérieure 10b de la paroi latérale 40 est intégralement réalisée en aluminium anodisé ou en alliage d'aluminium anodisé.

On va maintenant détailler le procédé de fabrication d'un article culinaire conforme à l'invention. Ce procédé comprenant les étapes successives suivantes, lues en références aux figures 1 à 3 :
- mise en forme, par emboutissage, d'une feuille 5 en aluminium ou en alliage d'aluminium pour lui conférer la forme finale de l'article culinaire 1, 10 et ainsi définir sa face intérieure 1a, destinée à la cuisson des aliments, et sa face extérieure 1b, 10b, destinée à être disposée du côté de la source de chaleur,
- application, par matriçage, sur la face extérieure 1b, 10b, du fond 3, 30, d'une plaque 7, 70 destinée à recouvrir au moins une portion de la feuille 5,
- dépôt, au moins sur toute la face intérieure la de l'article culinaire 1, 10, d'au moins une couche destinée à former, après cuisson, un premier revêtement antiadhésif 6, puis
- anodisation de l'article culinaire 1, 10, la plaque 7, 70 étant réalisée en un métal ou en un matériau revêtu d'un métal, ledit métal étant choisi de manière à résister à cette étape d'anodisation.

Comme déjà indiqué ci-dessus, on utilise un métal de transition tel que le titane, le zirconium ou le niobium pour le métal de la plaque 7, 70 et, le cas échéant, l'acier ou l'acier inoxydable, ferritique ou non, comme matériau revêtu dudit métal ou d'un carbure ou nitrure d'un tel métal.

Dans une version plus particulièrement avantageuse, le procédé selon l'invention comprend en outre, après l'étape de matriçage et avant l'étape de dépôt du premier revêtement antiadhésif 6, une étape de réalisation d'un second revêtement antiadhésif 8, 80, sur tout ou partie de la portion de la feuille 5 non recouverte par la plaque 7, 70.

Pour la réalisation du second revêtement antiadhésif 8, 80, il est possible de déposer sur tout ou partie de la portion de la feuille 5 non recouverte par la plaque 7, 70, une composition comprenant une résine thermostable résistant à au moins 200°C.

Une telle résine thermostable résistant à au moins 200°C comprend classiquement une résine fluorocarbonée, seule ou mélangée avec une ou plusieurs autres résines thermostables résistant à au moins 200°C.

Cette résine fluorocarbonée, dont les propriétés hydrophobes sont reconnues, peut être du polytétrafluoroéthylène (PTFE), du copolymère de tétrafluoroéthylène et de perfluoropropylvinyléther (PFA) ou du copolymère de tétrafluoroéthylène et d'hexafluoropropylène (FEP) ou un mélange de ces résines fluorocarbonées.

Les autres résines thermostables résistant à au moins 200°C peuvent être un polyamide imide (PAI), une sulfone de polyéthylène (PES), un sulfure de polyphénylène (PPS), une polyéthercétone (PEK), ou une polyétheréthercétone (PEEK).

Ces résines thermostables présentent donc l'avantage particulier de résister à un traitement d'anodisation.

La présente invention concerne également un procédé de fabrication d'un article culinaire selon l'invention.

Préférentiellement, cette étape de réalisation d'un second revêtement antiadhésif est une étape unique d'émaillage de la totalité ou d'une partie de la portion 5b de la feuille 5 non recouverte par la plaque 7, 70, cette étape d'émaillage comportant les étapes successives suivantes :
i. préparation d'une pâte anhydre à partir d'une fritte d'émail pulvérulente qui comprend 0,82% à 6,75 % en poids par rapport au poids total de la pâte d'au moins un élément fondant choisi dans le groupe constitué par l'oxyde de plomb PbO, l'oxyde de bismuth Bi₂O₃ et le pentoxyde de vanadium V₂O₅, ladite pâte étant formulée sous forme d'une dispersion dans un milieu non aqueux ;
ii. application de la pâte anhydre en au moins une couche de pâte sur la totalité ou une partie de la portion 5b de la feuille 5 non recouverte par la plaque 7, 70;
iii. cuisson de la couche de pâte à une température comprise entre 540°C et 575°C, et de préférence à une température d'environ 560°C, pour former un revêtement d'émail qui présente après cuisson une épaisseur sensiblement uniforme dont la valeur moyenne est comprise entre 15 et 40 µm avec un écart par rapport à cette valeur moyenne d'épaisseur d'au plus 10%.

Dans le procédé de l'invention, la seule étape de réalisation d'un revêtement d'émail est dite avant l'étape d'anodisation, ce qui a pour effet de réduire la surface d'aluminium exposée à l'anodisation. Etant donné que le coût de l'anodisation est directement proportionnel à la surface d'aluminium exposée dans le bain d'anodisation, le procédé de l'invention présente l'avantage d'être peu coûteux.

La formulation de la fritte d'émail sous forme d'une pâte anhydre permet d'obtenir un revêtement d'émail offrant une résistance à un traitement d'anodisation ultérieur qui est supérieure à celle d'une couche d'émail obtenue à partir d'une barbotine (c'est-à-dire une fritte d'email dispersée en milieu aqueux), et qui permet donc de s'affranchir de la réalisation d'une étape d'émaillage suite à l'anodisation sans perte au niveau des qualités esthétiques de l'émaillage. La suppression de cette étape d'émaillage après l'anodisation permet aussi de réduire le coût d'un tel procédé associant anodisation et émaillage.

Ce procédé présente également l'avantage d'être compatible avec n'importe quelle nuance d'aluminium ou d'alliage d'aluminium. De préférence, on utilise à titre d'alliages d'aluminium les alliages 3003, 4006, et 4700. L'alliage d'aluminium préféré est l'alliage 3003.

De préférence, la pâte anhydre utilisée dans le procédé de l'invention comprend 1,1 à 5,25%, et mieux 2,2 à 4,5% en poids de pentoxyde de vanadium V₂O₅ par rapport au poids total de la pâte.

De manière avantageuse, la pâte anhydre comprend 55 à 75% en poids de fritte d'émail pulvérulente par rapport au poids total de la pâte. En effet, si la pâte contient plus de 75% en poids de fritte d'émail par rapport au poids total de la pâte, celle-ci est trop visqueuse et ne peut d'étaler facilement. Par contre, si la pâte contient moins de 55% en poids de fritte, la pâte est beaucoup trop fluide et nécessite d'être déposée en plusieurs couches successives pour arriver à une couche d'émail, après cuisson, ayant une épaisseur suffisante pour résister aux attaques acides, ce qui augmente d'autant le coût global du procédé.

De manière préférée, la pâte anhydre comprend 65% en poids de fritte d'émail pulvérulente par rapport au poids total de la pâte anhydre. Une telle pâte possède une fluidité suffisante pour s'étaler facilement lors de son application, ainsi qu'une consistance suffisante également pour permettre l'application d'une couche unique pour réaliser un revêtement d'émail après cuisson d'une épaisseur moyenne d'au moins 15 µm.

Si la fritte d'émail ne se présente pas sous forme pulvérulente, par exemple sous forme d'écailles, il faudra prévoir dans le procédé de fabrication de l'invention une étape supplémentaire de broyage à sec de la fritte d'émail.

Selon une version particulièrement avantageuse de l'invention, la fritte d'émail comprend :
o SiO₂ : 30 à 38 % ;
o V₂O₅ : 3 à 7 % ;
o NaOH : 15 à 25 % ;
o LiOH : 0.5 à 4 % ;
o KOH : 8 à 17 % ;
o TiO₂ : 18 à 25 % ;
les teneurs indiquées étant des pourcentages en poids par rapport au poids de la fritte.

Dans la pâte anhydre destinée à former le revêtement d'émail, la fritte d'émail est dispersée dans un milieu non aqueux, qui peut être un milieu huileux ou un solvant, de préférence à point d'ébullition élevé (notamment supérieur à 150°C) et de préférence le terpinéol, le white spirit (solvant d'origine minérale, distillant généralement entre 130 et 200°C) et leurs'mélanges.

Outre la fritte d'émail, la pâte anhydre selon l'invention peut également comprendre des éléments d'addition tels que des pigments, des charges, et/ou des opacifiants.

La pâte anhydre destinée à former le revêtement d'émail peut être appliquée de diverses manières sur la surface extérieure de l'article culinaire selon l'invention, et notamment par pulvérisation (pistolage), au rideau, par sérigraphie ou encore par tampographie. De manière préférée, cette application est réalisée par sérigraphie ou tampographie.

La viscosité de la pâte anhydre est adaptée en fonction de la technique d'application de la pâte qui est choisie. Ainsi, une pâte présentant une viscosité de 2000 à 8000 Cp mesurée par un viscosimètre de type cône plan sera de préférence appliquée par sérigraphie ou par tampographie.

La pâte anhydre peut être appliquée sur la surface extérieure de l'article culinaire en une couche unique ou en plusieurs couches.

Selon un premier mode de réalisation de l'invention, la pâte anhydre est appliquée en une couche unique de manière à former un revêtement d'émail présentant après cuisson une épaisseur moyenne comprise entre 15 et 30 µm.

Selon un deuxième mode de réalisation de l'invention, la pâte anhydre est appliquée en bicouche, de manière à réaliser un revêtement d'émail présentant après cuisson une épaisseur comprise entre 25 et 40 µm.

A titre d'exemple d'application de la pâte anhydre en bicouche, on peut par exemple envisager d'appliquer une première couche de pate anhydre par sérigraphie pour donner une épaisseur humide d'environ 25 µm. Cette pâte est ensuite séchée à 80°C pendant 30s, pour donner un « biscuit » sur lequel est appliqué également par sérigraphie une seconde couche de pâte anhydre d'épaisseur humide environ 25 microns. Cette couche est également séchée. Puis, l'ensemble des 2 couches est étuvé 10 minutes à 560°C pour donner un email vitrifié d'épaisseur 35 microns.

Il est bien évident que dans le cas où l'on choisit un premier revêtement antiadhésif 6 à base d'une résine organique et un second revêtement antiadhésif 8, 80 du type émail, l'ordre d'exécution des étapes de dépôt des différentes compositions est dicté par les températures de cuisson auxquelles ces compositions doivent être soumises pour l'obtention de ces premier et second revêtements antiadhésifs 6, 8, 80.

La dernière étape d'anodisation est classiquement réalisée par trempage de l'article culinaire dans un bain d'acide sulfurique, seul ou en mélange avec de l'acide oxalique, et avec une température du bain d'acide de -5°C à 25°C. La tension continue appliquée sur l'article peut varier entre 10 et 100 V.

De préférence, l'anodisation est une anodisation dite « dure », réalisée dans un bain d'acide sulfurique dont la température est de -5°C.

L'anodisation est généralement achevée par une étape de colmatage hydrothermal, dont le principe consiste à transformer l'alumine Al₂O₃ formé pendant l'anodisation en alumine monohydratée. Cela a pour conséquence de réduire la porosité de la couche d'anodisation. Ce traitement est réalisé par trempage dans un bain d'eau dont la température minimale est de 90°C et la valeur du pH comprise entre 5.5 et 6.5.

De nombreuses variantes peuvent être apportées à la présente invention, sans sortir du cadre de la présente invention.

## Revendications

1. Article culinaire (1, 10) réalisé à partir d'une feuille (5) emboutie présentant la forme finale de l'article (1, 10) et définissant une face intérieure (1a) destinée à la cuisson des aliments et une face extérieure (1b, 10b) destinée à être disposée du côté de la source de chaleur, ledit article culinaire (1, 10) comprenant un fond (3, 30) et une paroi latérale (4, 40) s'élevant à partir du dit fond (3, 30), la face extérieure (1b, 10b) du fond (3, 30) comprenant une plaque (7, 70) centrée sur le fond (3, 30) et recouvrant au moins une portion (5a) de la feuille (5), **caractérisé en ce que** la feuille (5) est en aluminium ou en alliage d'aluminium et la plaque (7, 70) est réalisée en un métal ou en un matériau revêtu d'un métal, d'un carbure ou d'un nitrure d'un métal, ledit métal étant choisi de manière à résister à une étape d'anodisation, et **en ce que** la face extérieure (1b, 10b) au moins de la paroi latérale (4, 40) est en aluminium anodisé ou en alliage d'aluminium anodisé et **en ce que** la face intérieure (1a) de l'article culinaire (1, 10) est pourvue d'un premier revêtement anti-adhésif (6).

2. Article culinaire (1, 10) selon la revendication 1, **caractérisé en ce que** la portion (5b) de la feuille (5) constituant le fond (3, 30) et non recouverte par la plaque (7, 70) comprend un second revêtement anti-adhésif (8, 80).

3. Article culinaire (1, 10) selon la revendication 1 ou 2, **caractérisé en ce que** la plaque (7, 70), éventuellement composée de plusieurs éléments, est partiellement encastrée dans la feuille (5).

4. Article culinaire (1, 10) selon l'une quelconque des revendications 1 à 3, **caractérisé en ce que** la plaque (7, 70), qui peut comprendre des trous (10), recouvre entre 5 et 30% de la surface totale du fond (3, 30).

5. Article culinaire (1, 10) selon l'une quelconque des revendications 1 à 4, **caractérisé en ce que** le métal de la plaque (7, 70) est choisi parmi les métaux de transition tels que le titane, le zirconium ou le niobium, le matériau qui en constitue, le cas échéant, le coeur qui est alors recouvert du dit métal ou d'un carbure ou d'un nitrure de ce même métal, étant choisi parmi l'acier, l'acier inoxydable, ferritique ou non.

6. Article culinaire (1, 10) selon l'une quelconque des revendications 2 à 5, **caractérisé en ce que**, le fond (3, 30) de l'article culinaire (1, 10) étant légèrement concave, la zone du fond (3, 30) destinée à être
en contact avec la plaque de cuisson est intégralement revêtue par le second revêtement anti-adhésif (8, 80).

7. Article culinaire (1, 10) selon l'une quelconque des revendications 2 à 6, **caractérisé en ce que** le second revêtement anti-adhésif (8, 80) est un revêtement d'émail et/ou un revêtement obtenu à partir d'une composition comprenant une résine thermostable résistant à au moins 200°C.

8. Article culinaire (1, 10) selon l'une quelconque des revendications 1 à 6, **caractérisé en ce que** le premier revêtement anti-adhésif (6) est obtenu à partir d'une composition comprenant une résine thermostable résistant à au moins 200°C.

9. Article culinaire (1, 10) selon la revendication 7 ou 8, **caractérisé en ce que** la résine thermostable résistant à au moins 200°C est une résine silicone ou une résine fluorocarbonée telle que du PTFE.

10. Article culinaire (1) selon l'une quelconque des revendications 2 à 9, **caractérisé en ce que** la face extérieure (1b) du fond (3) est entièrement recouverte par la plaque (7) et le second revêtement anti-adhésif (8).

11. Article culinaire (10) selon l'une quelconque des revendications 2 à 9, **caractérisé en ce que** les surfaces (81a, 81b) de la face extérieure (10b) du fond (30) qui ne sont pas recouvertes par la plaque (70) et par le second revêtement anti-adhésif (80), sont en aluminium anodisé ou en alliage d'aluminium anodisé.

12. Procédé de fabrication d'un article culinaire (1, 10) comprenant un fond (3, 30) et une paroi latérale (4, 40) se dressant à partir du fond (3, 30), ledit procédé comprenant les étapes suivantes :
- mise en forme, par emboutissage, d'une feuille (5) en aluminium ou en alliage d'aluminium pour lui conférer la forme finale de l'article culinaire (1, 10) et ainsi définir la face intérieure (1a) de l'article culinaire (1, 10), destinée à la cuisson des aliments, et la face extérieure (1b, 10b) de l'article culinaire (1, 10), destinée à être disposée du côté de la source de chaleur ;
- dépôt, au moins sur toute la face intérieure (1a) de l'article culinaire (1, 10), d'au moins une couche destinée à former, après cuisson, un premier revêtement anti-adhésif (6) ; puis
- anodisation de l'article culinaire (1, 10), la plaque (7, 70) étant réalisée en un métal ou en un matériau revêtu d'un métal ou d'un carbure ou d'un nitrure de ce même métal, ledit métal étant choisi de manière à résister à cette étape d'anodisation ;
**caractérisé en ce que** le procédé comprend en outre une étape d'application, par matriçage, sur la face extérieure (1b, 10b) du fond (3, 30), d'une plaque (7, 70) destinée à recouvrir au moins une portion (5a) de la feuille (5), ladite étape de matriçage étant réalisée avant les étapes de dépôt d'au moins une couche destinée à former après cuisson un premier revêtement antiadhésif, puis d'anodisation de l'article culinaire.

13. Procédé selon la revendication 12, **caractérisé en ce que**, après l'étape de matriçage et avant l'étape de dépôt du premier revêtement anti-adhésif (6), on procède en outre au dépôt, sur tout ou partie de la portion (5b) de la feuille (5) non recouverte par la plaque (7, 70), d'au moins une couche destinée à former, après cuisson, un second revêtement anti-adhésif (8, 80).

14. Procédé selon la revendication 12 ou 13, **caractérisé en ce que** l'on utilise un métal de transition tel que le titane, le zirconium ou le niobium pour le métal de la plaque (7, 70) et, le cas échéant, l'acier ou l'acier inoxydable, ferritique ou non, comme matériau revêtu du dit métal ou d'un carbure ou d'un nitrure du dit métal.

15. Procédé selon l'une quelconque des revendications 12 à 14, **caractérisé en ce que** l'on utilise une composition comprenant une résine thermostable résistant à au moins 200°C pour former le premier revêtement anti-adhésif (6).

16. Procédé selon l'une quelconque des revendications 13 à 15, **caractérisé en ce que** l'on utilise une composition comprenant une fritte d'émail et/ou une résine thermostable résistant à au moins 200°C pour former le second revêtement anti-adhésif (8, 80).

17. Procédé selon la revendication 15 ou 16, **caractérisé en ce que** la résine thermostable résistant à au moins 200°C est une résine silicone ou une résine fluorocarbonée telle que du PTFE.

## Claims

1. A culinary item (1, 10) formed from a swaged sheet (5) having the final shape of the item (1, 10) and defining an inner surface (1a) intended to the baking of food and an outer surface (1b, 10b) intended to be disposed towards the heat source, said culinary item (1, 10) including a bottom (3, 30) and a lateral wall (4, 40) rising from said bottom (3, 30), the outer surface (1b, 10b) of the bottom (3, 30) including a plate (7, 70) centred on the bottom (3, 30) and covering at least a portion (5a) of the sheet (5), **characterized in that** the sheet (5) is made of aluminium or aluminium alloy and the plate (7, 70) is made of a metal or a material coated with a metal, or a carbide or a nitride of a metal, said metal being selected so as to resist an anodising step, and **in that** the outer surface (1b, 10b) at least of the lateral wall (4, 40) is made of anodised aluminium or anodised aluminium alloy and **in that** the inner surface (1a) of the culinary item (1, 10) is provided with a first anti-adhesive coating (6).

2. A culinary item (1, 10) according to claim 1, **characterized in that** the portion (5b) of the sheet (5) forming the bottom (3, 30) and not covered with the plate (7, 70) includes a second anti-adhesive coating (8, 80).

3. A culinary item (1, 10) according to claim 1 or 2, **characterized in that** the plate (7, 70), possibly comprised of several elements, is partially embedded into the sheet (5).

4. A culinary item (1, 10) according to any of claims 1 to 3, **characterized in that** the plate (7, 70), that can include holes (10), covers between 5 and 30% of the total area of the bottom (3, 30).

5. A culinary item (1, 10) according to any of claims 1 to 4, **characterized in that** the metal of the plate (7, 70) is selected from transition metals such as titanium, zirconium or niobium, the material optionally forming the core thereof that is then covered with the said metal or a carbide or nitride of this metal, being selected from steel, stainless steel, ferritic or not.

6. A culinary item (1, 10) according to any of claims 2 to 5, **characterized in that** the bottom (3, 30) of the culinary item (1, 10) being slightly concave, the area of the bottom (3, 30) intended to contact the cooking plate is integrally coated with the second anti-adhesive coating (8, 80).

7. A culinary item (1, 10) according to any of claims 2 to 6, **characterized in that** the second anti-adhesive coating (8, 80) is an enamelled coating and/or a coating obtained from a composition including a thermostable resin resisting to at least 200°C.

8. A culinary item (1, 10) according to any of claims 1 to 6, **characterized in that** the first anti-adhesive coating (6) is obtained from a composition including a thermostable resin resisting to at least 200°C.

9. A culinary item (1, 10) according to claim 7 or 8, **characterized in that** the thermostable resin resisting to at least 200°C is a silicone resin or a fluorocarboned resin such as PTFE.

10. A culinary item (1) according to any of claims 2 to 9, **characterized in that** the outer surface (1b) of the bottom (3) is totally covered with the plate (7) and the second anti-adhesive coating (8).

11. A culinary item (10) according to any of claims 2 to 9, **characterized in that** the surfaces (81a, 81b) of the outer surface (10b) of the bottom (30) that are not covered with the plate (70) and with the second anti-adhesive coating (80), are made of anndised aluminium or anodised aluminium alloy.

12. Method for producing a culinary item (1, 10) including a bottom (3, 30) and a lateral wall (4, 40) rising up from the bottom (3, 30), said method comprising the following steps:
- shaping, by swaging, an aluminium or aluminium alloy sheet (5) to provide it with the final shape of the culinary item (1, 10) and thus define the inner surface (1a) of the culinary item (1, 10), intended to the baking of food, and the outer surface (1b, 10b) of the culinary item (1, 10), intended to be disposed on the side of the heat source;
- depositing, at least throughout the inner surface (1a) of the culinary item (1, 10), at least one layer intended to form, after baking, a first anti-adhesive coating (6); and then
- anodising the culinary item (1, 10), where the plate (7, 70) is made of a metal or a material coated with a metal, a carbide or a nitride of this metal, such metal being selected so as to resist this anodising step;
**characterized in that** the method further includes a step of applying, by stamping, onto the outer surface (1b, 10b) of the bottom (3, 30), a plate (7, 70) intended to cover at least a portion (5a) of the sheet (5), said stamping step being carried out before the steps of depositing at least one layer intended to form after the baking a first anti-adhesive coating, and then of anodising the culinary item.

13. Method according to claim 12, **characterized in that**, after the stamping step and before the step of depositing the first anti-adhesive coating (6), depositing of at least one layer intended to form, after baking, a second anti-adhesive coating (8, 80) is further carried out, on all or part of the portion (5b) of the sheet (5) not covered with the plate (7, 70).

14. Method according to claim 12 or 13, **characterized in that** a transition metal such as titanium, zirconium or niobium for the metal of the plate (7, 70) and, optionally, steel or stainless steel, ferritic or not, as the material coated with the said metal or a carbide or nitride of the said metal are used.

15. Method according to any of claims 12 to 14, **characterized in that** a composition including a thermostable resin resisting to at least 200°C to form the first anti-adhesive coating (6) is used.

16. Method according to any of claims 13 to 15, **characterized in that** a composition including an enamelled frit and/or a thermostable resin resisting to at least 200°C to form the second anti-adhesive coating (8, 80) is used.

17. Method according to claim 15 or 16, **characterized in that** the thermostable resin resisting to at least 200°C is a silicone resin or a fluorocarboned resin such as PTFE.

## Patentansprüche

1. Küchenartikel (1, 10), der aus einer tiefgezogenen Tafel (5) hergestellt ist, welche die endgültige Form des Artikels (1, 10) aufweist und eine Innenseite (1a) definiert, die zum Garen von Nahrungsmitteln bestimmt ist, sowie eine Außenseite (1b, 10b), die dazu bestimmt ist, seitens Wärmequelle abgestellt zu werden, wobei der Küchenartikel (1, 10) einen Boden (3, 30) und eine Seitenwand (4, 40) aufweist, die sich vom Boden (3, 30) erhebt, wobei die Außenseite (1b, 10b) des Bodens (3, 30) eine Platte (7, 70) aufweist, die am Boden (3, 30) zentriert ist und zumindest einen Abschnitt (5a) der Tafel (5) bedeckt, **dadurch gekennzeichnet, dass** die Tafel (5) aus Aluminium bzw. aus einer Aluminiumlegierung besteht und die Platte (7, 70) aus einem Metall bzw. einem mit einem Metall, einem Metallkarbid oder einem Metallnitrid beschichteten Material hergestellt ist, wobei das Metall so ausgewählt ist, dass es einem Anodisierungsschritt standhält, und dass zumindest die Außenseite (1b, 10b) der Seitenwand (4, 40) aus anodisiertem Aluminium bzw. aus einer anodisierten Aluminiumlegierung besteht, und dass die Innenseite (1a) des Küchenartikels (1, 10) mit einer ersten Antihaftbeschichtung (6) versehen ist.

2. Küchenartikel (1, 10) nach Anspruch 1, **dadurch gekennzeichnet, dass** der den Boden (3, 30) bildende und nicht mit der Platte (7, 70) bedeckte Abschnitt (5b) der Tafel (5) eine zweite Antihaftbeschichtung (8, 80) aufweist.

3. Küchenartikel (1, 10) nach Anspruch 1 oder 2, **dadurch gekennzeichnet, dass** die gegebenenfalls aus mehreren Teilen zusammengesetzte Platte (7, 70) teilweise in die Tafel (5) eingelassen ist.

4. Küchenartikel (1, 10) nach irgendeinem der Ansprüche 1 bis 3, **dadurch gekennzeichnet, dass** die Platte (7, 70), die Löcher (10) aufweisen kann, zwischen 5 und 30 % der Gesamtfläche des Bodens (3, 30) bedeckt.

5. Küchenartikel (1, 10) nach irgendeinem der Ansprüche 1 bis 4, **dadurch gekennzeichnet, dass** das Metall der Platte (7, 70) aus den Übergangsmetallen, wie Titan, Zirkonium bzw. Niobium ausgewählt ist, wobei das Material, das gegebenenfalls den Kern davon bildet, der dann mit dem Metall bzw. einem Karbid bzw. einem Nitrid dieses gleichen Metalls bedeckt wird, aus Stahl, rostfreiem Stahl, ferritisch oder nicht ferritisch, ausgewählt ist.

6. Küchenartikel (1, 10) nach einem der Ansprüche 2 bis 5, **dadurch gekennzeichnet, dass** bei einem leicht konkaven Boden (3, 30) des Küchenartikels (1, 10) derjenige Bereich des Bodens (3, 30), der mit der Kochplatte in Kontakt gelangen soll, vollständig mit der zweiten Antihaftbeschichtung (8, 80) beschichtet ist.

7. Küchenartikel (1, 10) nach irgendeinem der Ansprüche 2 bis 6, **dadurch gekennzeichnet, dass** die zweite Antihaftbeschichtung (8, 80) eine Emaille-Beschichtung und/oder eine Beschichtung ist, die aus einer Zusammensetzung mit einem bei wenigstens 200°C beständigen thermostabilen Harz erhalten wird.

8. Küchenartikel (1, 10) nach irgendeinem der Ansprüche 1 bis 6, **dadurch gekennzeichnet, dass** die erste Antihaftbeschichtung (6) aus einer Zusammensetzung mit einem bei wenigstens 200°C beständigen thermostabilen Harz erhalten wird.

9. Küchenartikel (1, 10) nach Anspruch 7 oder 8, **dadurch gekennzeichnet, dass** das bei wenigstens 200°C beständige thermostabile Harz ein Silikonharz bzw. ein Fluorkohlenstoffharz, wie etwa PTFE, ist.

10. Küchenartikel (1) nach irgendeinem der Ansprüche 2 bis 9, **dadurch gekennzeichnet, dass** die Außenseite (1b) des Bodens (3) vollständig mit der Platte (7) und der zweiten Antihaftbeschichtung (8) bedeckt ist.

11. Küchenartikel (10) nach irgendeinem der Ansprüche 2 bis 9, **dadurch gekennzeichnet, dass** diejenigen Flächen (81a, 81b) der Außenseite (10b) des Bodens (30), die nicht mit der Platte (70) und der zweiten Antihaftbeschichtung (80) bedeckt sind, aus anodisiertem Aluminium bzw. aus einer anodisierten Aluminiumlegierung bestehen.

12. Verfahren zum Herstellen eines Küchenartikels (1, 10) mit einem Boden (3, 30) und einer Seitenwand (4, 40), die sich vom Boden (3, 30) erhebt, wobei das Verfahren folgende Schritte umfasst:
- Formgebung einer Tafel (5) aus Aluminium oder Aluminiumlegierung durch Tiefziehen, um dieser die endgültige Form des Küchenartikels (1, 10) zu geben und damit die Innenseite (1a) des Küchenartikels (1, 10), die zum Garen von Nahrungsmitteln bestimmt ist, und die Außenseite (1b, 10b) des Küchenartikels (1, 10), die zum Abstellen seitens der Wärmequelle bestimmt ist, zu definieren;
- Aufbringen zumindest einer Schicht, die nach Härtung zum Bilden einer ersten Antihaftbeschichtung (6) bestimmt ist, mindestens auf die gesamte Innenseite (1a) des Küchenartikels (1, 10); danach
- Anodisierung des Küchenartikels (1, 10), wobei die Platte (7, 70) aus einem Metall bzw. aus einem mit einem Metall, einem Karbid oder einem Nitrid dieses gleichen Metalls beschichteten Material hergestellt ist, wobei das Metall so ausgewählt ist, dass es diesem Anodisierungsschritt standhält;
**dadurch gekennzeichnet, dass** das Verfahren ferner einen Schritt zum Aufbringen einer Platte (7, 70) durch Gesenkschmieden auf die Außenseite (1b, 10b) des Bodens (3, 30) umfasst, welche Platte dazu bestimmt ist, zumindest einen Abschnitt (5a) der Tafel (5) zu bedecken, wobei der Gesenkschmiedeschritt vor den Schritten zum Aufbringen zumindest einer Schicht, die nach Härtung zum Bilden einer ersten Antihaftbeschichtung bestimmt ist, und zum Anodisieren des Küchenartikels erfolgt.

13. Verfahren nach Anspruch 12, **dadurch gekennzeichnet, dass** nach dem Schritt zum Gesenkschmieden und vor dem Schritt zum Aufbringen der ersten Antihaftbeschichtung (6) ferner das Aufbringen zumindest einer Schicht, die nach Härtung zum Bilden einer zweiten Antihaftbeschichtung (8, 80) bestimmt ist, auf den gesamten Abschnitt (5b) der Tafel (5) bzw. einen Teil davon, der nicht mit der Platte (7, 70) bedeckt ist, erfolgt.

14. Verfahren nach Anspruch 12 oder 13, **dadurch gekennzeichnet, dass** ein Übergangsmetall, wie Titan, Zirkonium bzw. Niobium für das Metall der Platte (7, 70) und gegebenenfalls Stahl bzw. rostfreier Stahl, ferritisch oder nicht ferritisch, als mit dem Metall oder einem Karbid oder einem Nitrid des Metalls beschichtetes Material verwendet wird.

15. Verfahren nach irgendeinem der Ansprüche 12 bis 14, **dadurch gekennzeichnet, dass** eine Zusammensetzung mit einem bei wenigstens 200°C beständigen thermostabilen Harz zum Bilden der ersten Antihaftbeschichtung (6) verwendet wird.

16. Verfahren nach irgendeinem der Ansprüche 13 bis 15, **dadurch gekennzeichnet, dass** eine Zusammensetzung mit einer Emaillefritte und/oder einem bei wenigstens 200°C beständigen thermostabilen Harz zum Bilden der zweiten Antihaftbeschichtung (8, 80) verwendet wird.

17. Verfahren nach Anspruch 15 oder 16, **dadurch gekennzeichnet, dass** das bei wenigstens 200°C beständige thermostabile Harz ein Silikonharz bzw. ein Fluorkohlenstoffharz, wie etwa PTFE, ist.
